Europäisches Patentamt

European Patent Office

Office européen des brevets

(11) Publication number: **0 135 649**
**B1**

# EUROPEAN PATENT SPECIFICATION

(45) Date of publication of patent specification: **21.01.87**

(21) Application number: **84102910.1**

(22) Date of filing: **17.02.81**

(60) Publication number of the earlier application in accordance with Art. 76 EPC: **0 038 114**

(51) Int. Cl.⁴: **B 65 D 30/10,** B 65 D 81/34, B 65 D 33/16

(54) **Flexible thermoplastic bag for use in food package.**

(30) Priority: **28.07.80 US 172922**
**11.04.80 US 139363**

(43) Date of publication of application:
**03.04.85 Bulletin 85/14**

(45) Publication of the grant of the patent:
**21.01.87 Bulletin 87/04**

(84) Designated Contracting States:
**BE CH DE FR IT LI NL**

(56) References cited:
**GB-A-2 016 400**
**US-A-3 403 716**
**US-A-3 851 574**
**US-A-3 873 735**

(73) Proprietor: **THE DOW CHEMICAL COMPANY**
**2030 Dow Center Abbott Road P.O. Box 1967**
**Midland, MI 48640 (US)**

(72) Inventor: **Stevenson, Fred**
**2658 Blades**
**Beaverton Michigan 48612 (US)**

(74) Representative: **Allard, Susan Joyce et al**
**BOULT, WADE & TENNANT 27 Furnival street**
**London EC4A 1PQ (GB)**

EP 0 135 649 B1

Courier Press, Leamington Spa, England.

### Description

The present invention resides in a flexible thermoplastic bag useful as a cold storage and microwave oven cooking utensil and to a food package comprising such a flexible thermoplastic bag and a food product contained therein. More particularly the bag is comprised of two wing sections with a central neck portion (or filling spout). The wing sections are the product containment sections of the bag. The neck portion, in addition to being usable for filling and emptying the bag, provides an exhaust opening to allow the venting of gas and steam from the bag during cooking. Various closures may be utilized to close the fill spout such as an integral, reclosable, zipper-type fastener element.

With the advent of microwave ovens and the frequent cooking in such ovens of foods taken directly from a freezer, it is desirable to have a thermoplastic container which can be compactly stored in a freezer but which can also be used directly in a microwave oven. Rigid containers which stand upright are not always of the most compact shape for storage in the freezer, often take up unnecessary room when not fully filled, and customarily require lid removal to allow venting during cooking. Thermoplastic storage and cooking bags which can be laid on their sides have the disadvantage that when opened for venting during cooking, spillage of product in the oven can result.

Since the introduction of microwave cooking, it has been desirable to have a compact plastic pouch which can stand upright sufficiently to avoid spillage, yet remain flexible enough so that the storage space beyond that of the product contained therein is essentially not required to be utilized in the freezer compartment. Compact freezing bags with a top opening are illustrated by U.S. Patent No. 3,389,783, for example, but these have not been designed for venting or microwave cooking and are merely a flat, pillow-type package. Stand-ups bags, such as typically illustrated in U.S. Patent No. 3,799,914 or 3,380,646, are designed to contain feed in their upright sections, which make the bags more readily upsettable if they were to be used in a microwave oven for cooking. Other packages designed to give wider bottoms for packaging, such as shown in U.S. Patent No. 3,003,681, still are intended to contain the bulk of the product in the upright portion of the container, which does not make for most efficient stacking or cooking.

A gussetted microwave-compatible bag is disclosed in US—A—3851574. The popcorn contained therein fills the central and gusset portions of the bag and on cooking expands to fill the bag. The gusset portions permit expansion of the volume of the bag. Bags of this type are customarily laid on their sides when the product is being cooked.

GB—A—2016400 discloses a package for use in containing moisture-containing material, e.g. refreshers, which package is formed of a sheet material which embraces the moist material and defines a re-sealable flap extending from the package to define the package opening. Specifically, the film material is a plastics/aluminium laminate and there is no suggestion that these bags could be used to contain a food product.

The above containers have advantageous features which represent the state of the art prior to the present invention but which fail to include the improvements necessary to have a superior freezer to microwave oven bag which is compact, yet non-spillable in a cooking environment.

In a first aspect there is provided a microwave-compatible flexible bag of thermoplastic film material (as known from US—A—3 851 574), characterised in that it comprises a central neck portion and two wing sections which extend from opposite sides of the neck portion, that the neck portion forms an internal channel to provide the only communication between the wing sections and the outside of the bag and in that the neck portion is smaller than each of the wing sections.

By "microwave-compatible" we mean that the bag may be used as a cook-in-bag pouch in microwave ovens, i.e. it should be non-metallic and non-meltable under typical microwave cooking conditions.

In a second aspect the invention provides a package for use as a cold storage and cooking utensil, comprising a microwave-compatible flexible thermoplastic bag, characterised in that the bag comprises a central neck portion and two wing sections which extend from opposite sides of the neck portion, the neck portion forming an internal channel to provide communication between the wing sections and the outside of the bag, and in that there is a food product contained substantially entirely in the wing sections of the bag, the only exit for the product being through the neck portion, whereby spilling of the food product from the bag is avoided during heating.

The package may be used for cooking in other than microwave ovens, for example as a boil-in-bag pouch, or merely for product containment and storage.

The bag can be formed of a single-layered or multilayered synthetic resinous thermoplastic material. If formed of a multilayered material, the inside and outside skins should be of thermoplastic materials having different melt temperatures with the inner layers having a lower melt temperature. By forming the bag with a gusset and sealing at the lower melt temperature range, wings are formed because the outer skin layers of the gusset do not seal to one another.

When a reclosable, zipper-type fastener or other closure means is contained in the neck portion of the bag, the closure may be designed to be sensitive to increases in vapor pressure within the bag so that the engaging elements of the fastener can automatically open to vent the package upon build-up of pressure during cooking. If the package is not opened prior to cooking, this automatic-venting feature acts as a safety feature against the bursting of the package due to increases in vapor pressure during cooking.

The engaging elements of the zipper-type fastener can be integrated into the neck portion of the bag by forming them from the inner layers of the thermoplastic material of a multilayer bag or by coextruding a thermoplastic material formed into fastener elements onto the bag material. By forming the engaging elements of the fastener from a thermoplastic material having a softening temperature sensitive to heat normally involved with cooking food products, as may be experienced in microwave cooking, for example, the above-mentioned automatic-venting feature may be enhanced. Upon softening during cooking, the engaging elements of the fastener become more flexible, but do not melt, thereby aiding in the automatic opening of the package upon pressure build-up within the package.

By having the wings comprise the substantial pouch part of the bag, their lay-flat characteristics permit ready stacking of the containers in a freezer compartment with the unfilled spout portion being laid over on one of the wings during storage. The bags can then be transferred directly from the freezer to a microwave oven for cooking, the spout being erected so that cooking can take place without spillage.

Containers for food products are commonly flat bags which lie on their sides, stand-up bags which are subject to tipping over, or rigid containers which lack flexibility and take up excess room. By this invention, a bag has been provided which stands up without tipping, can be stacked one upon another when filled, compactly stored when empty and has a neck which serves as a handle as well as a filling and venting spout when required to serve such functions. The bag of this invention has particular use in freezer storage to microwave cooking applications. In a freezer storage compartment, the neck portion of a filled bag can be folded over for stacking of a plurality of bags upon one another into a flat layered configuration. When used for cooking, a product contained in the bag can be spread out into a thinner, flatter block for more rapid, uniform heating. The neck of the bag is adapted to serve as a splatter shield when the neck portion is opened for venting.

In order that the invention may be better understood, reference is made to the accompanying drawings in which:

Figure 1 is an isometric view of a bag constructed according to the principles of the present invention, with wing sections of the bag shown in the process of being opened in dotted lines in preparation for receiving product to be contained therein;

Figure 2 is a fragmentary enlarged cross-sectional view of the multilayered structure of the bag taken along Reference Line 2—2 of Figure 1;

Figure 3 is an end view of the bag of Figure 1 showing pillow-shaped wing sections containing a product therein and the upright spout portion which is used for filling the container and venting the container during cooking;

Figure 4 is a plan view of the filled bag of Figure 3 with the spout being opened;

Figure 5 is a side view of the filled bag of Figure 3 with the spout being opened;

Figure 6 is a cross-sectional view of the filled bag taken along Reference Line 6—6 of Figure 4; and

Figure 7 is an end view of a stack of filled bags of Figure 3 only with their spout portions bent over as they might be arranged in a freezer.

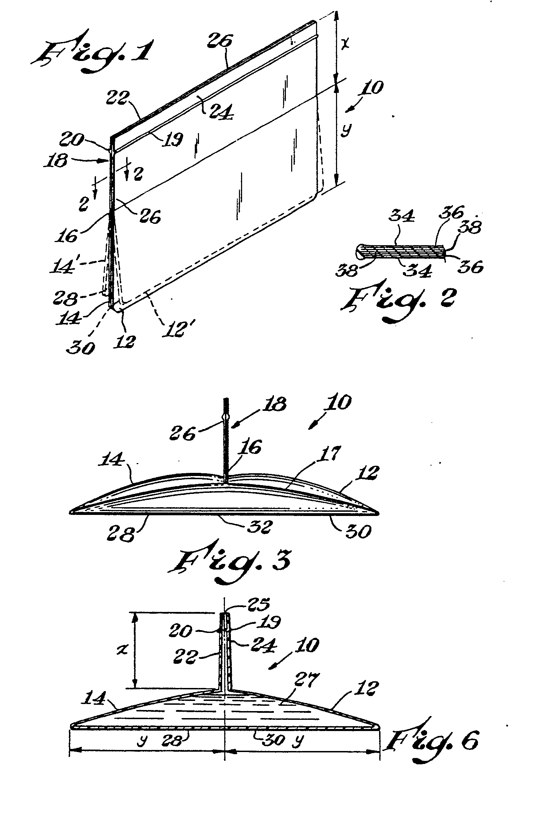

More specifically, there is shown in Figure 1 a disposable storage and cooking bag 10 formed of a transparent or opaque synthetic resinous thermoplastic film material or materials to be later described. Bag 10 comprises wing sections or pouches 12 and 14 shown in a closed position in solid lines and shown in a slightly open position shown in dotted lines 12' and 14'. Extending upwardly from a juncture 16 of the wings 12 and 14 is a neck or spout section 18. Side panels 22 and 24 are separable along an edge 26 except at their lateral extremities where they are sealed to each other to close the sides of the spout 18.

The spout section 18 contains a closure means comprised of male and female fastener elements 19 and 20, respectively. The dimensions and/or shapes of the fastener elements 19 and 20 determine the magnitude of resistance offered against their separation by pressure exerted from within the bag. Accordingly, it is preferred, but not essential to the invention, that fastener elements 19 and 20 be designed such that when the vapor pressure within the bag increases due to cooking of a product such as food or a liquid in a frozen or non-frozen condition, the fastener opens to permit venting of vapors through channel 25 as shown in Figure 6. This automatic-venting feature acts as a safety precaution against the bursting of the bag due to pressure build-up during cooking. If the fastener elements 19 and 20 are not designed to separate during cooking, the fastener elements should be opened prior to cooking. The designing of appropriate fastener elements is well known in the art and disclosed, for example, in U.S. Patent No. 3,338,285 and U.S. Patent No. 3,198,228.

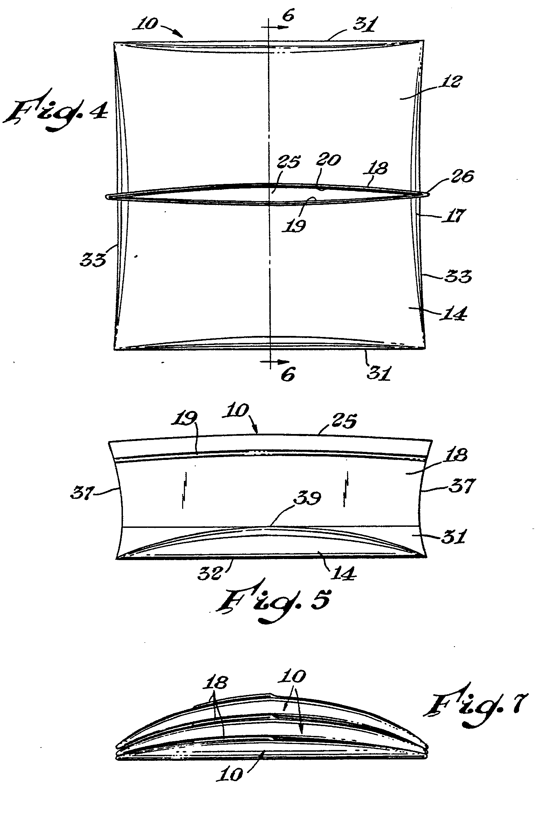

Various methods may be employed to incorporate the fastener elements in the spout section 18. For example, the elements 19 and 20 can be formed from the thermoplastic material of side panels 22 and 24. If the material of side panels 22 and 24 is multilayered, elements 19 and 20 are formed from the inner layer of each panel. In Figure 2, the plies or layers of the multilayered bag material are depicted in cross-section as they face one another in the spout section 18 (which contains the fastening means) and comprise, for example, outer skin layers 34 which are held to inner skin layers 38 by glue layers 36, with the inner skin layer 38 of each side panel 22 and 24 facing each other. Elements 19 and 20 are preferably formed upon the inner skin layers 38.

Preferably, inner skin layer 38, from which the fastener elements 19 and 20 are formed, is formed of a thermoplastic material that is heat softenable at temperatures common to the cooking of the product contained in the bag. For example, inner layer 38 can be formed of a high or low density polyethylene resin having a melt temperature of about 107°C to 137°C. Of course, the thermoplastic material must be non-meltable at such cooking temperatures when food is to be cooked in the bag. When the fastener elements 19 and 20 are formed from material that is heat softenable at cooking temperatures, the automatic-venting feature described above can be enhanced. As the thermoplastic material softens at cooking temperatures, the fastener elements become more flexible and thereby open more easily to vent the bag upon pressure build-up within the bag.

A second exemplary method of incorporating elements 19 and 20 in the spout section 18 is by coextruding a thermoplastic material forming the fastener elements onto the thermoplastic material forming side panels 22 and 24. Again, it is preferred that the fastener elements 19 and 20 be formed from thermoplastic material that is heat softenable at cooking temperatures so as to aid in the opening of the closure to permit automatic venting of the bag 10. For example, the fastener elements 19 and 20 can be formed from a low density polyethylene resin having a melt temperature of about 107°C to 137°C that is coextruded onto a high density polyethylene material that forms the sole or inner layer of side panels 22 and 24.

Figure 3 shows the end of bag 10 when filled illustrating the slight end bulge 17 which is lower than wing sections 12 and 14 because the ends are confined by the seal at joint 16.

Figure 4 is a top view of the bag 10 illustrating that the bag is basically square, such as 8 inches by 8 inches (20.32 cm by 20.32 cm) on its sides 31 and ends 33 of a typical example. The spout 18 is in an open position exposing filling and venting channel 25.

Figure 5 is a view looking at one side 31 of bag 10 illustrating that as the wing sections 12, 14 are filled the spout 18 tips at its ends 37. If the neck is of insufficient height, that is, if it is only slightly above, at, or below the crest 39 of the wing section 14 when filled, leakage or splatter from channel 25 of spout 18 would occur. Likewise, if too tall, spout 18 may fall or fold over due to its own weight and would also take too much material. It has been found that for an 8 inch by 8 inch (20.32 cm by 20.32 cm) bag with closure means contained in the spout, as viewed in Figure 4, a spout height of from 1 to 3 inches (2.54 cm to 62 cm) is practical and about 2 inches (5.08 cm) is preferred. By having a practical height for spout 18, the need for placing the bag in a dish to avoid spillage, as with prior art bags, is obviated.

In its filled form, food or other product 27 contained in the bag 10 occupies an area located in each of the wing sections 12 and 14, as illustrated in Figure 6. When the bag 10 is fully opened out, as illustrated in Figure 3, the wing sections 12 and 14 lie longitudinally on a flat surface. They are formed by the surfaces 28 and 30 joining together to form a bottom 32 for the bag which is adaptable for laying on any substantially flat surface. The surfaces 28 and 30 do not stick together during the subsequent edge sealing operation because either the surfaces themselves are separated by a thermal insulating insert, when the sealing of the bag edges occurs, or the surfaces are formed of materials which do not stick together or seal at the temperatures at which the rest of the bag seals.

Figure 2 more clearly illustrates a preferred embodiment in which the outer skin layer 34, the glue layer 36 and the inner skin layer 38 of each ply face one another in the spout 18. The inner skin layers 38 can be formed, for example, of a low melt temperature olefinic, polymeric material while the outer skin layers 34 can be formed of a polyester or a nylon-type polyamide thermoplastic material having melt temperatures substantially in excess of that of the inner skin layer materials. The inner skin layers 38, if formed of a low or high density polyethylene resin, would have a melt temperature of about 107°C to 137°C, respectively. High density polyethylene, having a density of about 0.95 gms/cm$^3$ and above, is advantageously employed, as generally its melt temperature is above the boiling point of water and will not become tacky during during cooking. However, low density polyethylene (about 0.89 to 0.93 gms/cm$^3$) and polypropylene can also be employed. The outer skin layers 34, if formed of a typical nylon, such as Nylon 6 resin of Allied Chemical Company, would have a melt temperature of about 215°C or of a typical polyester, such as polyethylene terephthalate, of about 250°C. The glue layers 36 can be an ionomer copolymer such as a duPont Surlyn® resin, or Chemplex Plexar modified polyolefin, or an ethylene-acrylic acid copolymer. The inner skin layers 38 could be 1.5 mils thick, the outer skin layers 34, 0.4 mils thick and the glue layer 36, 0.3 mils thick, if desired. As a further example, for bags having a wall thickness from about 1½ to 4 mils, suitable for most applications, the inner layer could comprise 50—80% of the total thickness, the glue layer 10—20%, and the outer layer 10—40%, if desired. Typical values are 68%, 14% and 18%, respectively. The multilayered film can be coextruded by a process such as taught in U.S. Patent Nos. 3,354,506 or 3,557,265, for example.

The preferred process for forming the bag 10 is to form it from thermoplastic film material having an inner skin layer 38 and an outer skin layer 34 with inner skin layer 38 having a significantly lower heat-softening temperature than outer skin layer 34. Two plies of the thermoplastic material are layed against one another so that the inner skin layer 38 abuts against itself to form opposite sides. Surfaces 28 and 30, which are part of outer skin layers 34, are joined together to form the bottom 32 for the bag. The bottom 32 is then gussetted so that surfaces 28 and 30 face one another. Heat is applied along the opposite margins of the sides of the bag by a hot bar or other sealing element at a temperature above the softening temperature of inner skin layer 38 but below that of the outer skin layer 34. At this temperature, sealing of the inner skin layers 38 occurs while surfaces 28 and 30, being part of outer skin layers 34, fail to seal or join together. Thus, a bag 10 having wing-shaped pouches 12 and 14 is formed by the gussetted section with the non-gussetted section forming the central neck portion 18 for the bag that is in open communication with the wing sections 12 and 14. This process is claimed in our copending application EP—A—0038114.

Upon disengaging fastener elements 19 and 20, the spout 18 can be opened by separating side panels 22 and 24 to form a feed channel 25 for introducing a product such as food or liquid 27 into each of the wing sections 12 and 14. A sufficient quantity of the product is introduced so as to fill the wing sections 12 and 14 without any significant amount of the product being contained in the spout or neck portion 18.

The spout 18 is shown lying in a folded-over position in Figure 7. This permits easy stacking of the filled containers 10 when it is desired to freeze the product 27 with a plurality of other like containers 10 and for storing the stacked containers in a freezer until desired for cooking, such as illustrated in Figure 7. Since the spout can be folded over, one bag can be positioned directly on top of another bag with the wing sections of one bag resting on the wing sections of the next lower bag.

Preferably, it has been found that when the neck portion of the bag contains a closure means, the width of each wing section 12 or 14 should be more than one-half of the total height of the bag when in a disposition as shown in full lines in Figure 1. Of course, in the bag of the invention the width of the wing sections 12 and 14 will always be more than half the total height of the bag, although this is not the case in the package of the invention. In one typical embodiment, distance Y, the width of surface 28 or surface 30 of wing sections 12 or 14 would be about 4 to 5 inches long (10.16 cm to 12.70 cm), while the height X of the spout or neck portion would be about 2 inches (5.08 cm) as shown in Figures 1 and 6. With such an arrangement, the bulk of the container is formed of the wing sections, while the neck or filling spout 18 constitutes a minor portion of the bag. The bag does not therefore become a stand-up bag. It is, in effect, a lay-flat bag, but one which is not spillable because of the upstanding neck portion, and due to the fact that there is no substantial product intended to be contained in the neck portion.

Various types of closures (not illustrated herein) may be utilized in the practice of the invention in order to close the filling spout of the bag as will be readily apparent to persons skilled in the art. When the spout is not secured too tightly by a closure, venting of gas and steam from within the bag is provided while the substantial closing of the spout aids in keeping the spout erect to prevent spillage of the product from within the bag.

Applicable closures (in addition to the integral zipper-type fastener described above and depicted in the drawings) include, but are not limited to, plastic clips such as those disclosed in U.S. Patent Nos. 3,370,396; 3,334,805 and 2,981,990; omega shaped plastic fasteners such as those disclosed in U.S. Patent No. 3,535,746; plastic tie straps such as those disclosed in U.S. Patent Nos. 3,633,247; 3,874,034; 3,972,469 and 3,973,610; detachable tie straps such as those disclosed in U.S. Patent Nos. 3,779,139; 3,865,303; 3,052,399 and 3,974,960; and closures using the dead fold characteristics of metal (e.g., twist-ties) such as those disclosed in U.S. Patent Nos. 3,417,863; 3,481,461 and 3,565,738. Rubber bands, string, adhesive tape and adhesives are further examples of closure means that may be employed to close the filling spout of the bag.

When a closure is to be adjacent to the bag during microwave use, the closure should be microwave compatible. That is, it should be non-metallic and non-meltable under typical microwave cooking conditions.

If the closure is not integral to the neck portion of the bag, the height of the neck portion should be sufficient to allow for ease of handling in opening and closing the exhaust opening to empty, fill or provide venting of the package. A neck height of at least about 4 inches (10.16 cm) is practical and about 6 inches (15.24 cm) is preferred. A neck portion of a height of less than 4 inches (10.16 cm) will not tie or close adequately and a height of greater than 6 inches (15.24 cm) is unnecessary and may result in the neck portion falling or folding over due to its own weight. Closing the neck portion as close to the two wing-shaped pouch portions as possible provides the neck with the best upright stability when a tie strap or similar type closure is utilized.

The bag may also be provided without any reclosable closure means. For example, a portion of the neck portion of the bag may be torn or cut away as a means of providing an exhaust opening to allow venting of vapours during cooking.

**Claims**

1. A microwave-compatible flexible bag (10) of thermoplastic film material, characterised in that it comprises a central neck portion (18) and two wing sections (12, 14) which extend from opposite sides of the neck portion (18), that the neck portion (18) forms an internal channel (25) to provide the only communication between the wing sections (12, 14) and the outside of the bag (10) and in that the neck portion (18) is smaller than each of the wing sections (12, 14).

2. A flexible bag as claimed in claim 1 wherein the neck portion (18) is provided with a microwave-compatible closure means (26).

3. A flexible bag as claimed in claim 2 wherein the closure means (26) is adapted to automatically open to permit venting when a food product (27) within the bag (10) is heated and the vapour pressure within the bag (10) increases.

4. A flexible bag as claimed in claim 3 wherein the material forming the closure means (26) is heat softenable at cooking temperatures to aid in opening the closure means (26) to permit venting.

5. A flexible bag as claimed in any one of preceding claims wherein the wing sections (12, 14) when coplanar form a base portion of 8 inches by 8 inches (20.32 cm by 20.32 cm) and the neck portion is of from 1 to 3 inches (2.54 to 7.62 cm) high.

6. A flexible bag as claimed in any one of claims 1 to 4 wherein the neck portion (18) has a height which is less than one-half the width of one of the wing sections (12, 14) from the juncture with the neck portion (18) to the edge of the wing section (12 or 14).

7. A flexible bag as claimed in any one of the preceding claims wherein the neck portion (18) is not so high as to fold over under its own weight.

8. A flexible bag as claimed in any one of the preceding claims wherein the film material has a plurality of layers (34, 38), the film material being folded upon itself and gussetted at its bottom so that the inside layer (38) faces itself and the facing surfaces of the inside layer (38) at the margins of the film material being sealed together to close the sides of the bag (10), the gussetted bottom forming the wing sections (12, 14) from which the central neck portion (18) extends opposite the gusset, the inside layer (38) of the film material having a lower heat-softening temperature than the outside layer (34).

9. A flexible bag as claimed in claim 8 wherein the inside layer (38) is formed from a high or low density polyethylene resin having a melt temperature of from 107°C to 137°C.

10. A flexible bag as claimed in claim 9 wherein the polyethylene has a density of at least 0.95 g/cm$^3$.

11. A flexible bag as claimed in any one of claims 8 to 10 wherein the outside layer (34) is formed from a nylon or a polyester resin.

12. A flexible bag as claimed in any one of the preceding claims which is a cold food storage and cook-in-bag pouch.

13. A package for use as a cold storage and cooking utensil, comprising a microwave-compatible flexible thermoplastic bag (10), characterised in that the bag (10) comprises a central neck portion (18) and two wing sections (12, 14) which extend from opposite sides of the neck portion (18), the neck portion (18) forming an internal channel (25) to provide communication between the wing sections (12, 14) and the outside of the bag (10), and in that there is a food product (27) contained substantially entirely in the wing sections (12, 14) of the bag (10), the only exit for the product (27) being through the neck portion (18), whereby spilling of the food product (27) from the bag (10) is avoided during heating.

14. A package as claimed in claim 13 wherein the wing sections (12, 14) are generally coplanar and the food product (27) is spread laterally thereover to permit even heating of the product (27) in a microwave oven.

15. A package as claimed in claim 13 or claim 14 including a closure means (26) in the neck portion (18), the closure means (26) being adapted to automatically open to permit venting of vapor from the bag (10) when the vapor pressure within the bag (10) increases due to heating of the food product (27) contained within the bag (10).

16. A package as claimed in claim 15 wherein the material forming the closure means (26) is heat softenable at cooking temperatures to aid in opening the closure means (26) to permit venting of vapors from the bag (10).

17. A package as claimed in any one of claims 13 to 16 wherein the neck portion (18) is smaller than each of the wing sections (12, 14).

18. A package as claimed in claim 17 wherein the height of the neck portion (18) is less than one-half the width of one of the wing sections (12, 14) from the juncture with the neck portion (18) to the edge of the wing section (12 or 14).

19. A package as claimed in any one of claims 13 to 18 wherein the bag walls are formed of an inner skin (38) and an outer skin (34) having different heat-softening temperatures, the outer skin (34) having a higher heat-softening temperature so that application of heat at a predetermined temperature is adapted to seal the contracting edges of the inner skin layers (38) without sealing the outer skin layers (34).

**Patentansprüche**

1. Mikrowellen-kompatibler, flexibler Beutel (10) aus thermoplastischem Folienmaterial, dadurch gekennzeichnet, daß er einen zentralen Füllansatz (18) umfaßt sowie zwei flügelartige Semgente (12, 14), die sich von den genenüberliegenden Enden des Füllansatzes (18) so erstrekken, daß der Füllansatz (18) einen inneren Kanal (25) bildet, und so die einzige Verbindung zwischen den flügelartigen Segmenten (12, 14) und der Beutelaußenseite (10; herstellt, und daß der Füllansatz (18) kleiner ist als jede der flügelartigen Segmente (12, 14).

2. Flexibler Beutel nach Anspruch 1, in welchem der Füllansatz (18) mit einer Mikrowellen-kompatiblen Verschlußvorrichtung (26) ausgestattet ist.

3. Flexibler Beutel nach Anspruch 2, in welchem die Verschlußvorrichtung (26) so ausgestattet ist, daß sie sich, um einen Gasabfluß zu ermöglichen, automatisch öffnet, wenn in dem Beutel (10) ein Nahrungsmittel (27) erhitzt wird und sich der Dampfdruck in dem Beutel (10) erhöht.

4. Flexibler Beutel nach Anspruch 3, in welchem sich das die Verschlußvorrichtung (26) bildende Material in der Hitze bei Kochtemperaturen erweicht, und damit das Öffnen der Verschlußvorrichtung (26) erleichtert, um so den Gasabfluß zu ermöglichen.

5. Flexibler Beutel nach einem der vorhergehenden Ansprüche, in welchem die flügelartigen Segmente (12, 14), wenn sie coplanar sind, eine Grundfläche von 8 inch auf 8 inch (20,32 cm × 20,32 cm) bilden, und der Füllansatz 1 bis 3 inch (2,45 bis 7,62 cm) hoch ist.

6. Flexibler Beutel nach einem der Ansprüche 1 bis 4, in welchem der Füllansatz (18) eine Höhe von weniger als die Hälfte der Länge von einem der flügelartigen Segmente (12, 14) aufweist, gemessen von der Verbindung des Füllansatzes (18) bis zu den Enden der flügelartigen Segmente (12 oder 14).

7. Flexibler Beutel nach einem der vorhergehenden Ansprüche, in dem der Füllansatz (18) nicht so hoch ist, daß er sich unter seinem eigenen Gewicht umfaltet.

8. Flexibler Beutel nach einem der vorhergehenden Ansprüche, bei welchem das Folienmaterial aus einer Mehrzahl von Schichten (34, 38) besteht, das Folienmaterial übereinandergefaltet ist und der Boden so gefaltet ist, daß die Innenschicht (38) sich selbst gegenüberliegt und die sich gegenüberliegenden Oberflächen der Innenschicht (38) an den Rändern des Folienmaterials dicht miteinander verbunden sind, um die Seiten des Beutels (10) zu verschließen, der gefaltete Boden die flügelartigen Segmente (12, 14) ausbildet, von denen der Falte gegenüberliegend der zentrale Füllansatz (18) ausgeht, sich die Innenschicht (38) des Folienmaterials bei geringeren Temperaturen erweicht, als die Außenschicht.

9. Flexibler Beutel nach Anspruch 8, bei welchem die Innenschicht (38) aus einem Polyethylenharz mit einer hohen oder niederen Dichte gebildet wird, das eine Schmelztemperatur von 107 bis 137°C aufweist.

10. Flexibler Beutel nach Anspruch 9, bei welchem das Polyethylen eine Dichte von mindestens 0,95 g/cm³ hat.

11. Flexibler Beutel nach einem der Anspüche 8 bis 10, bei dem die Außenschicht (34) aus einem Nylon- oder Polyesterharz gebildet wird.

12. Flexibler Beutel nach einem der vorhergenden Ansprüche, der ein Behälter zur Kaltlagerung von Lebensmitteln und ein Kochbeutel ist.

13. Verpackung zur Verwendung als Behälter für die Kaltlagerung und als kochutensil, umfassend einen Mikrowellen-kompatiblen, flexiblen Thermoplastikbeutel (10), dadurch gekennzeichnet, daß der Beutel (10) einen zentralen Füllansatz (18) und zwei flügelartige Segmente (12, 14) umfaßt, die von den dem Füllansatz (18) gegenüberliegenden Seiten ausgehen, der Einfüllansatz (18) einen internen Kanal (25) ausbildet, um so eine Verbindung zwischen den flügelartigen Segmenten (12, 14) und der Außenseite des Beutels (10) herzustellen, und daß ein Lebensmittel (27) im wesentlichen vollständig in den flügelartigen Segmenten (12, 14) des Beutels (10) enthalten ist, der einzige Austritt für das Produkt (27) der Füllansatz (18) ist, wobei ein Verschütten des Nahrungsmittels (27) aus dem Beutel (10) während des Erhitzens vermieden wird.

14. Verpackung nach Anspruch 13, in der die flügelartigen Segmente (12, 14) im allgemeinen coplanar sind und sich das Nahrungsmittel (27) darin lateral ausbreitet, um so eine gleichmäßige Erwärmung des Mittels (27) in einem Mikrowellenherd zu ermöglichen.

15. Verpackung nach Anspruch 13 oder 14, umfassend eine Verschlußvorrichtung (26) im Füllansatz (18), wobei die Verschlußvorrichtung (26) so ausgestaltet ist, daß der Dampf aus dem Beutel (10) entweichen kann, wenn sich der Dampfdruck im Beutel (10) aufgrund der Erwärmung des Nahrungsmittels (27), welches im Beutel (10) enthalten ist, erhöht.

16. Verpackung nach Anspruch 15, bei der das Material, welches die Verschlußvorrichtung (26) bildet, bei Kochtemperaturen erweichbar ist, um so das Öffnen der Verschlußvorrichtung (26) su erleichtern, damit die Dämpfe aus dem Beutel (10) entweichen können.

17. Verpackung nach einem der Ansprüche 13 bis 16, bei welcher Der Füllansatz (18) kleiner ist, als jede der flügelartigen Segmente (12, 14).

18. Verpackung nach Anspruch 17, bei der die Höhe des Füllansatzes (18) kleiner als die Hälfte der Länge eines der flügelartigen Segmente (12, 14) ist, gemessen von dem Ansatz des Füllansatzes (18) bis zu den Enden der flügelartigen Segmente (12 oder 14).

19. Verpackung nach einer der Ansprüche 13 bis 18, bei der die Beutelwände aus einer Innenhaut (38) und einer Außenhaut (34) mit unterschiedlichen Erweichungstemperaturen gebildet sind, wobei die Außenhaut (34) eine höhere Erweichungstemperatur hat, so daß die Anwendung von Wärme bei einer vorbestimmten Temperatur geeignet ist, die sich berührenden Kanten der Innenhautschichten (38) zu verschließen, ohne dabei die Außenhautschichten (34) zu verschließen.

**Revendications**

1. Sachet flexible (10) compatible avec les micro-ondes, fait d'un matériau de film thermoplastique, caractérisé en ce qu'il comprend une portion centrale en forme de col (18) et deux sections d'ailes (12, 14) qui s'étendent de part et d'autre de la portion en forme de col (18), en ce que la portion en forme de col (18) forme un conduit interne (25) pour donner la seule communication entre les sections d'ailes (12, 14) et l'extérieur du sachet (10) et en ce que la portion en forme de col (18) est plus petite ue chacune des sections d'ailes (12, 14).

2. Sachet flexible selon la revendication 1, caractérisé en ce que la portion en forme de col (18) est munie d'un moyen de fermeture (26) compatible avec les micro-ondes.

3. Sachet flexible selon la revendication 2, caractérisé en ce que le moyen de fermeture (26) est adapté pour s'ouvrir automatiquement afin de permettre un échappement à l'air libre lorsqu'un produit alimentaire (27) dans le sachet (10) est chauffé et que la pression de vapeur dans le sachet (10) augmente.

4. Sachet flexible selon la revendication 3, caractérisé en ce que le matériau formant le moyen de fermeture (26) est apte à se ramollir à la chaleur aux température de cuisson pour faciliter l'ouverture du moyen de fermeture (26) et permettre l'échappement à l'air libre.

5. Sachet flexible selon l'une quelconque des revendications précedentes, caractérisé en ce que les sections d'ailes (12, 14) lorsqu'elles sont coplainaires, forment une portion de base de 8 pouces sur 8 pouces (20,32 cm sur 20,32 cm) et en ce que la portion en forme de col a une hauteur allant de à 3 pouces (2,54 à 7,62 cm).

6. Sachet flexible selon l'une quelconque des revendications 1 à 4, caractérisé en ce que la portion en forme de col (18) a une hauteur inférieure à la moitié de la largeur d'une des sections d'ailes (12, 14) de la jointure avec la portion en forme de col (18) à la bordure de la section d'aile (12 ou 14).

7. Sachet flexible selon l'une quelconque des revendications précedentes, caractérisé en ce que la portion en forme de col (18) n'est pas assez élevée pour se plier sous son propre poids.

8. Sachet flexible selon l'une quelconque des revendications précedentes, caractérisé en ce que le matériau de film possède plusieurs couches (34, 38), le matériau de film étant plié sur lui-même et plié en soufflets en son fond pour que la couche interne (38) se fasse face, et les surfaces en vis-à-vis de la couche interne (38) au bord du matériau de film étant scéllées ensemble pour fermer les cotés du sachet (10), le fond à soufflets formant les sections d'ailes (12, 14) à partir desquelles, à l'opposé des soufflets, s'étend la portion centrale en forme de col (18), la couche interne (38) du matériau de film ayant une température de ramollissement à la chaleur plus basse que celle de la couche externe (34).

9. Sachet flexible selon la revendication 8, caractérisé en ce que la couche interne (38) est formée d'une résine de polyéthylène haute ou basse densité ayant une température de fusion allant de 107°C à 137°C.

10. Sachet flexible selon la revendication 9, caractérisé en ce que le polyéthylène a une masse volumique d'au moins 0,95 g/cm³.

11. Sachet flexible selon l'une quelconque des revendications 8 à 10, caractérisé en ce que la couche externe (34) est formée d'un nylon ou d'une résine de polyester.

12. Sachet flexible selon l'une quelconque des revendications précedentes, caractérisé en ce qu'il est un conditionnement au froid pour produits alimentaires et un sachet pour cuisson en sachet.

13. Emballage à utiliser comme conditionnement au froid et comme ustinsile de cuisson, comprenant un sachet thermoplastique (10) flexible et compatible avec les micro-ondes, caractérisé en ce que le sachet (10) comprend une portion centrale en forme de col (18) et deux sections d'ailes (12, 14) qui s'étendent de part et d'autre de la portion en forme de col (18), la portion en forme de col (18) formant un conduit interne (25) pour mettre en communication les sections d'ailes (12, 14) et l'extérieur du sachet (10), et en ce qu'il y a un produit alimentaire (27) presque entièrement contenu dans les sections d'ailes (12, 14) du sachet (10), le seule issue pour le produit (27) étant la portion en forme de col (18), ce qui évite que le produit alimentaire (27) se répande hors du sachet (10) au cours du chauffage.

14. Emballage selon la revendication 13, caractérisé en ce que les sections d'ailes (12, 14) sont généralement coplanaires et en ce que le produit alimentaire (27) s'y étale latéralement pour permettre le chauffage uniforme du produit (27) dans un four à micro-ondes.

15. Emballage selon la revendication 13 ou 14, comportant un moyen de fermeture (26) dans la portion en forme de col (18), le moyen de fermeture (26) étant adapté pour s'ouvrir automatiquement et permettre à la vapeur de s'échapper du sachet (10) lorsque la pression de vapeur à l'intérieur du sachet (10) augmente du fait du chauffage du produit alimentaire (27) contenu dans le sachet (10).

16. Emballage selon la revendication 15, caractérisé en ce que le matériau formant le moyen de fermeture (26) est apte à se ramollir à la chaleur aux températures de cuisson pour favoriser l'ouverture du moyen de fermeture (26) et permettre aux vapeurs de s'échapper du sachet (10).

17. Emballage selon l'un quelconque des revendications 13 à 16, caractérisé en ce que la portion en forme de col (18) est plus petite que chacune des sections d'ailes (12, 14).

18. Emballage selon la revendication 17, caractérisé en ce que hauteur de la portion en forme de col (18) est inférieure à la moitié de la largeur d'une des sections d'ailes (12, 14) de la jointure avec la portion en forme de col (18) à la bordure de la section d'aile (12 ou 14).

19. Emballage selon l'un quelconque des revendications 13 à 18, caractérisé en ce que les parois du sachet sont formées d'une peau intérieure (38) d'une peau extérieure (34) ayant des températures différentes de ramollissement à la chaleur, la peau extérieure (34) ayant température de ramollissement à la chaleur plus élevée pour que l'application de chaleur à une température prédéterminée soit adaptée pour sceller les bords en contact des couches de peau intérieure (38) sans sceller les couches de peau extérieure (34).

*Fig. 1*

*Fig. 2*

*Fig. 3*

*Fig. 6*

1

*Fig. 4*

*Fig. 5*

*Fig. 7*